# EUROPEAN PATENT APPLICATION

(11) **EP 4 464 435 A1**
(43) Date of publication of application: **20.11.2024**
(21) Application number: 24174183.4
(22) Date of filing: 03.05.2024
(51) Int. Cl.: B21H 3/06, G01B 11/14

(54) **THREAD-ROLLING APPARATUS WITH DISTANCE-SENSING OPERATION**

(30) Priority: 16.05.2023 TW 112118032; 24.08.2023 TW 112131920
(71) Applicant: Hsiao, Chun-Yu, Kaohsiung City 82147 (TW)
(72) Inventor: Hsiao, Ming-Yi, 82147 Kaohsiung City (TW)
(74) Representative: Cabinet Chaillot

(57) **Abstract**

A thread-rolling apparatus (3) includes a base (31), a feeding unit (32), a thread-forming assembly (33), and a distance-sensing assembly (34) . The base (31) mainly includes a movable portion (311), a first body (312a), and a second body (312b) between the movable portion (311) and the first body (312a) . The thread-forming assembly (33) includes cooperating first and second dies (331, 332) and a working passage (333) formed between the dies (331, 332). The distance-sensing assembly (34) includes at least one sensing unit (341) disposed on the first body (312a) and a processing module (342) connected to the sensing unit (341) . The cooperation between the sensing unit (341) and the processing module (342) senses changes in a first distance (D1) between the first body (312a) and the second body (312b) in a non-contact manner whereby abnormal variations can be quickly observed and properly coped, and a second distance (D2) of the working passage (333) can be in a normal state. Accordingly, the yield rate of the thread-rolling apparatus (3) can be efficiently increased.

## Description

### BACKGROUND OF THE INVENTION

### 1. Field of the Invention

This invention relates to a thread-rolling machine and relates particularly to a thread-rolling apparatus capable of executing a distance-sensing operation.

### 2. Description of the Related Art

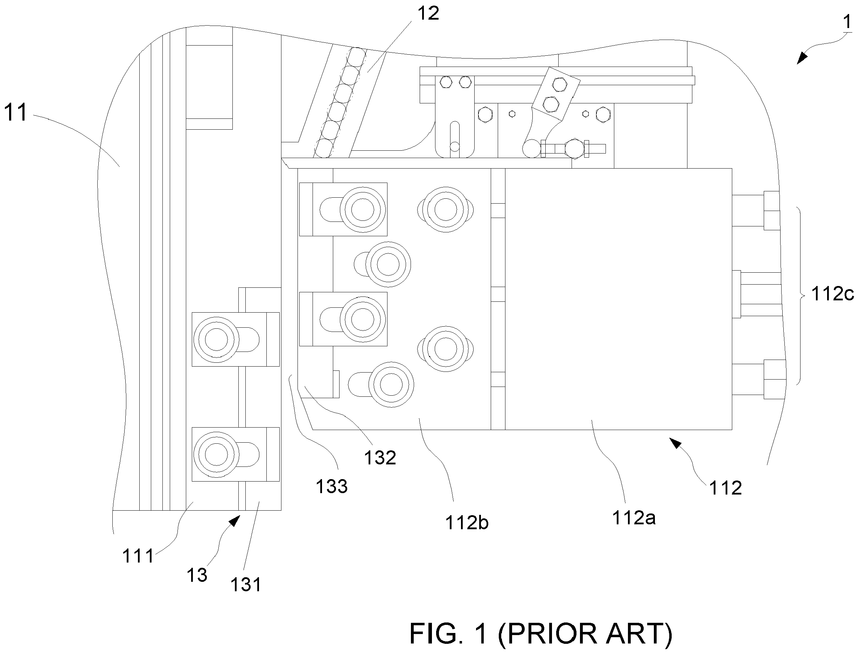

Referring to Fig. **1****,** a conventional thread rolling machine **1** includes a base **11,** a feeding unit **12,** and a rolling assembly **13** having two rolling dies **131, 132.** The base **11** includes two spaced-apart seats, namely a movable seat **111** and a fixed seat **112.** The fixed seat **112** includes a main body **112a** and an adjusting body **112b.** A space between the main body **112a** and the adjusting body **112b** is adjustable by operating an adjusting member **112c.** A passage **133** is formed between the dies **131, 132** downstream of the feeding unit **12.** In the process of forming threads, screw blanks are sequentially fed from the feeding unit **12** into the passage **133.** Then, each blank is squeezed to form threads thereon while rolling the blank in the passage **133.**

Although the dies **131, 132** are located on the base **11** in position, the frequent occurrence of the loosening situation and displacement is still incurred by the high-speed relative movement and vibration between the dies **131, 132** in the long term. Therefore, operators need to subject the rolling assembly **13** to an initial adjustment manually for deciding an initial distance applied to the passage **133** between the two dies **131, 132.** Then, an operation of forming threads on screw blanks is based on the initial distance, and screw products are obtained after the forming operation is finished. A manual inspection is also required. The inspection is based on a random selection of the screw products to determine whether the distance of the passage **133** changes and whether the distance needs to be revised. However, a disturbing trend is that multiple machines are synchronously operated because of the machinery automation but are monitored by only one operator. It is difficult for one operator to discover all mistakes immediately and make corrections in a timely manner, which renders the quality of the screw products unable to be efficiently controlled. Therefore, a large number of defective products may be caused, and manufacturing costs may be increased.

Another invention published by Taiwanese Utility Model No. M373788 discloses a pressure detector disposed on a thread-rolling machine and facing a rolling passage between two opposite dies, thereby adjusting the location of the dies according to detected pressure values. The pressure value is derived from the squeezing force added to screw blanks during a thread-forming process . However, this pressure detection mode cannot discover the changes in the distance between the dies immediately if the dies do not loosen explicitly. The conventional invention still needs to be improved.

### SUMMARY OF THE INVENTION

An object of this invention is to provide a thread-rolling apparatus capable of sensing variations in the distance of a fixed portion immediately and adjusting the distance of a working passage in a timely manner according to the variations, thereby allowing the distance of the passage to meet an initial setting condition and increasing the yield rate of a thread-rolling operation.

A thread-rolling apparatus with distance-sensing operation of this invention is as defined in claim 1. The thread-rolling apparatus mainly includes a base, a feeding unit disposed on the base, a thread-forming assembly located downstream of the feeding unit, and a distance-sensing assembly disposed on a fixed portion of the base. The fixed portion includes a first body, a second body, and a first distance defined between the second body and the first body. The second body is located between a movable portion of the base and the first body. The fixed portion is next to the movable portion. The thread-forming assembly includes a first die, a second die, and a working passage between the two dies. A width of the working passage defines a second distance. The distance-sensing assembly includes at least one sensing unit disposed on the first body of the fixed portion and a processing module connected to the sensing unit. A reference value is stored in the processing module. The sensing unit is configured to sense the first distance in a non-contact manner and to generate corresponding numeral data. The processing module subjects the numeral data to immediate comparison, analysis and determination, thereby checking if the first distance changes improperly and deciding if the second distance meets an initial requirement. A timely adjustment to the distances is based on the determination result, thereby preventing improper variations in the second distance during a thread-rolling operation of the thread-rolling apparatus and keeping the value of the second distance initial. Therefore, the quality and the yield rate of the thread-rolling operation can be efficiently increased.

Preferably, the sensing unit includes an emitter and a receiver. The emitter is adapted to emit the signals to the second body. The emitted signals returns back from the second body and then are received by the receiver, thereby allowing the returned signals to undergo the transformation into the numeral data.

Preferably, the distance-sensing assembly includes a plurality of sensing units respectively disposed on the first body.

Preferably, the first body includes a plurality of recesses opposite the second body. Each sensing unit can be disposed in each recess.

Preferably, a space is formed when a width of the first body is lower than a width of the second body. The plurality of sensing units can be respectively disposed in the space.

Preferably, a displaying unit can be connected to the distance-sensing assembly.

Preferably, the signals emitted by the sensing unit can be light signals or wave signals.

### BRIEF DESCRIPTION OF THE DRAWINGS

Fig. 1 is a schematic view showing a conventional thread-rolling machine;
Fig. 2 is a schematic view showing a first preferred embodiment of this invention;
Fig. 3 is a partial schematic view showing the operation of Fig. 2 for conducting an initial setting operation;
Fig. 4 is a partial schematic view showing the operation of Fig. 2 when inappropriate variations in the first distance and the second distance occur;
Fig. 5 is a schematic view showing a second preferred embodiment of this invention;
Fig. 6 is a left-side view of Fig. 5;
Fig. 7 is a schematic view showing the operation of Fig. 5; and
Fig. 8 is a schematic view showing a third preferred embodiment of this invention.

### DETAILED DESCRIPTION OF THE PREFERRED EMBODIMENTS

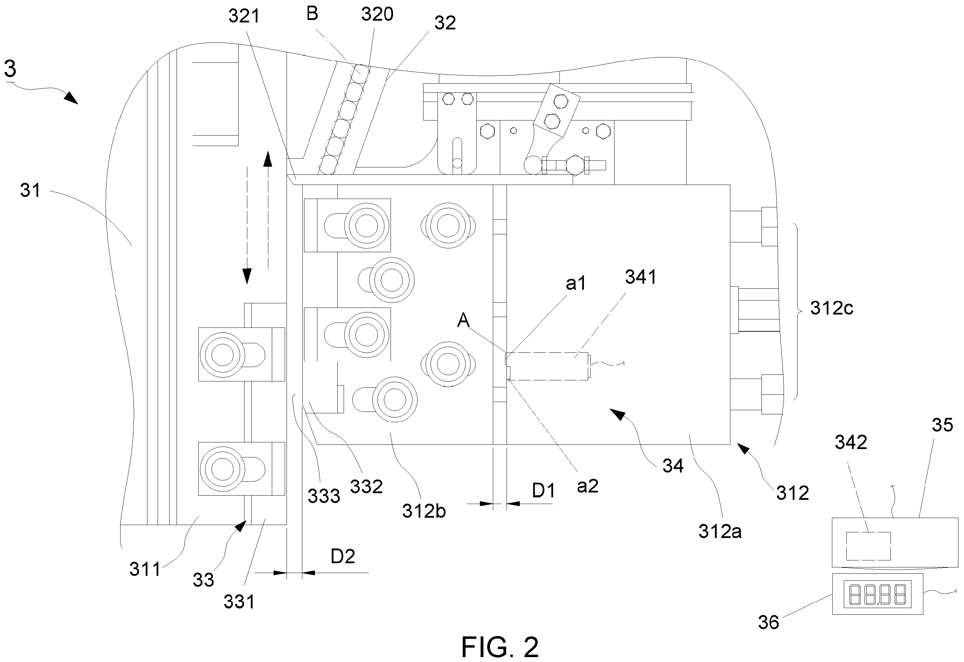

Referring to Fig. **2****,** a first preferred embodiment of this invention is related to a thread-rolling apparatus **3** with distance-sensing operation. The apparatus **3** includes a base **31** and also includes a feeding unit **32,** a thread-forming assembly **33,** and a distance sensing assembly **34** respectively disposed on the base **31.** The base **31** includes a movable portion **311** and a fixed portion **312** disposed beside the movable portion **311.** The fixed portion **312** is spaced apart from the movable portion **311.** The fixed portion **312** includes a first body **312a** and a second body **312b** disposed between the first body **312a** and the movable portion **311** and also defines a first distance **D1.** The first distance **D1** is the amount of space between the first body **312a** and the second body **312b.** An adjusting unit **312c** is configured to adjust the first distance **D1** between the second body **312b** and the first body **312a.**

The thread-forming assembly **33** is located downstream of the feeding unit **32** for receiving screw blanks **B** fed by the feeding unit **32.** The thread-forming assembly **33** includes a first die **331** disposed on the movable portion **311,** a second die **332** disposed on the second body **312b,** and a working passage **333** formed between the first die **331** and the second die **332** and connected to the feeding unit **32.** The working passage **333** defines a second distance **D2.** The second distance **D2** is the amount of space based on a width of the working passage **333** between the two dies **331, 332,** and the second distance **D2** is affected by the first distance **D1.**

The feeding unit **32** includes a feeding channel **320** where screw blanks **B** are accommodated and a pushing member **321** disposed between the working passage **333** and the feeding channel **320.** The screw blanks **B** are introduced from the feeding channel **320** towards the first die **331** and pushed to the working passage **333** by the pushing force of the pushing member **321** so that the screw blanks **B** are sequentially rolled forwards and squeezed between the dies **331, 332** to carry out a thread-rolling operation whereby threads are formed on the blanks **B.**

The distance-sensing assembly **34** (briefly shown) includes at least one sensing unit **341** and a processing module **342** connected to the sensing unit **341.** The sensing unit **341** is disposed on the first body **312a** and located relative to the second body **312b.** One or more than one sensing unit **341** can be used, and herein one sensing unit **341** is adopted as an example in the first preferred embodiment. The sensing unit **341** has a working end **A.** Preferably, at the working end **A** can be disposed an emitter **a1** capable of emitting signals and a receiver **a2** capable of receiving the signals of the emitter **a1.** The emitter **a1** can be a light emitting device for emitting light signals or a wave emitting device for emitting wave signals. Regarding the emission, the signals can be emitted without interruption or emitted at regular or selected intervals . The signal type and the frequency of the emission of signals can be adjusted according to needs of the thread-rolling operation.

The processing module **342** is connected to the sensing unit **341,** and a reference value is stored in the processing module **342.** The reference value is the initial basis which is set before a formal thread-rolling operation starts. According to needs, the representation of the reference value can be a designated numeral or a limited numeral range. Referring to Fig. **2****,** the processing module **342** can be disposed on a control unit **35** of the base **31.** Accordingly, the processing module **342** is configured to compare the numeral data transmitted by the sensing unit **341** with the reference value and determine whether the first distance **D1** changes, that is, whether there is a variation in the first distance **D1.** The control unit **35** controls the working state and operations of the base **31** according to the result of the determination. The comparison and determination of the processing module **342** can include following scenarios. One scenario is that when the numeral data corresponds to the reference value, there is no change in the first distance. Another scenario is that when the numeral data falls within the scope of the reference value, the numeral data is still accepted, and therefore there is no improper change in the first distance **D1.** If the scenarios occur, the processing module **342** does not trigger any operation controlled by the control unit **35.** However, a scenario that the numeral data do not correspond to the reference value or do not fall within the scope of the reference value means there is impermissible deviation, that is, an improper change caused by the difference of deviation. In this case, the control unit **35** activates a warning operation according to the determination of the processing module **342** to remind operators . The warning operation can be presented by flashing lights, sounding, stop operating the apparatus, etc. Furthermore, a displaying unit **36** can be connected to the distance-sensing assembly **34,** preferably connected to the sensing unit **341.** The difference of deviation determined by the processing module **342** can be displayed on the displaying unit **36,** and the associated second distance **D2** of the working passage **333** can be adjusted according to the displayed difference to overcome the deviation.

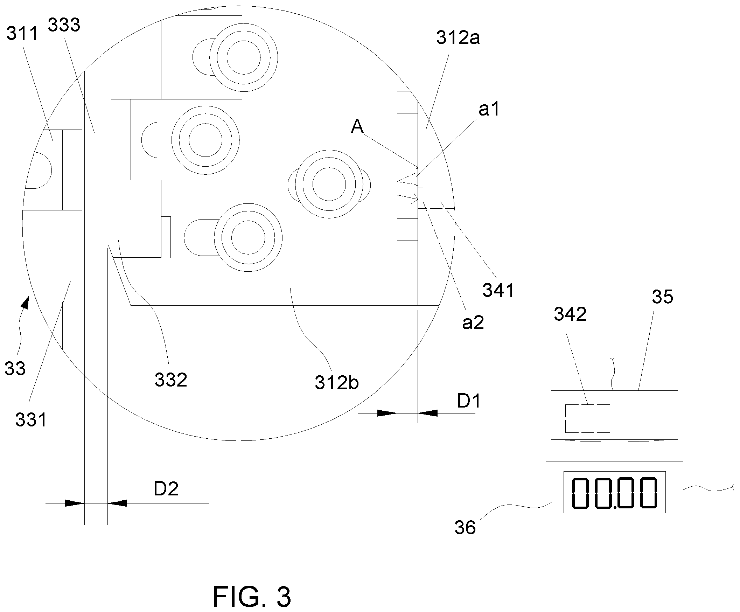

Before conducting a formal thread-rolling operation, an initial setting operation is required and described with the aid of Fig. 2 and Fig. **3****.** The initial setting operation includes positioning the first die **331** and the second die **332** onto the movable portion **311** and the second body **312b** respectively, adjusting and deciding initial locations of the movable portion **311** and the second body **312b** respectively to make sure that the first die **331** is parallel to the second die **332** and that the working passage **333** is properly formed therebetween, and then introducing some screw blanks from the feeding unit **32** into the working passage **33** for initial testing. If threads are successfully formed on the tested blanks by rolling the blanks within the passage **333,** initial locations of the movable portion **311** and the second body **312b** which contribute to the successful initial testing are deemed to be initial basis. Then, the sensing unit **341** disposed on the first body **312a** is actuated, so the emitter **a1** emits a signal towards the second body **312b** for conducting an initial sensing operation. When the emitted signal reaches the second body **312b,** it bends back so that the emitted signal returns back to the first body **312a** and is received by the receiver **a2.** The receiver **a2** transforms the received signal into numeral data and transmits the numeral data to the processing module **342.** According to the numeral data derived from the initial sensing operation, a reference value is set by the processing module **342** and stored in the processing module **342.** The representation of the reference value is not limited. As for example shown in Fig. **3****,** the reference value is a return-to-zero representation as basis of comparison and determination of variations in the distance during a formal thread-rolling operation.

After completing the initial setting operation, it is allowed to start the formal thread-rolling operation, a rolling process for forming threads on the screw blank **B.** The thread-rolling operation includes guiding screw blanks **B** from the feeding unit **32** to the pushing member **321** whereby the screw blanks **B** are sequentially pushed to the working passage **333** and clamped between the dies **331, 332.** Then, the operation includes rolling and squeezing the clamped blanks **B** under the movement of the first die **331** relative to the second die **332,** thereby forming threads on each screw blank **B.** A sensing operation of the sensing unit **341** and the thread-rolling operation work synchronously. That is, when the thread-rolling operation is conducted, the emitter **a1** emits signals such as light signals to the second body **312b** without stopping. After the emitted signals reach the second body **312b,** the signals return back to the first body **312a,** that is, the signals are reflected to the first body **312a.** Then, the receiver **a2** receives the reflected signals and transform related parameters of the signals into numeral data. As an example, the parameter can be the length of the signal. The numeral data is further transmitted to the processing module **342,** and the processing module **342** compares the transmitted numeral data with the stored reference value and determines whether to trigger a warning operation.

During the thread-rolling operation, it is common to vibrate the base **31** in a high-speed condition and move the first die **331** quickly via the movable portion **311.** The force of rolling and squeezing the screw blank **B** between the dies **331, 332** is suffered by the second body **312b,** and thus the second body **312b** becomes loose and deviates from its original location because of the vibration and the rolling and squeezing force. Therefore, the above factors affect the first distance **D1** and the second distance **D2** related to the first distance **D1.** Meanwhile, the process module **342** keeps receiving the numeral data transmitted by the receiver **a2** while the base **31** works. Each of the numeral data is compared with the reference value. In case the numeral data corresponds to the reference value or in case the numeral data is still within the range of the reference value, the processing module **342** determines that there is no improper variation in the first distance **D1** between the second body **312b** and the first body **312a.** No improper variation in the first distance **D1** means the second distance **D2** of the working passage **333** is still in a normal state. In this case, the processing module **342** does not trigger the control unit **35,** so no warning operation takes action, and the thread-rolling operation keeps working.

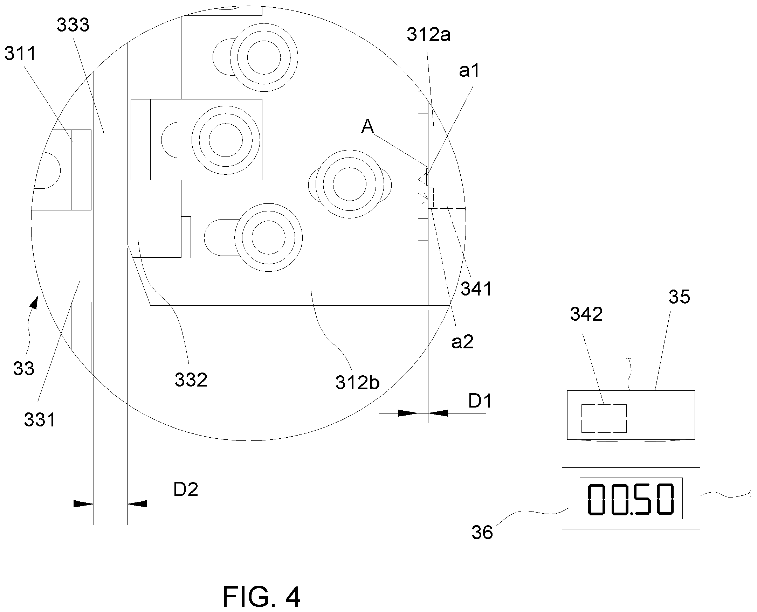

If the received numeral data is higher than or lower than the reference value in terms of a designated value which is set as the reference value for the basis of the comparison, the processing module **342** determines that there is an improper variation or change in the first distance **D1.** The improper variation means the location of the first distance **D1** is in the state of impermissible deviation, and the impermissible deviation leads to improper variation in the second distance **D2,** that is, the deviation of the distance shown in Fig. **4****.** Accordingly, the control unit **35** is immediately triggered according to the result of the determination of the processing module **342,** which causes a warning device of the base **31** to work for warning and concurrently causes the thread-rolling operation to pause under the control of the control unit **35.** Accordingly, an operator can be reminded by the warning device to check and remove faults. A difference value incurred by the improper deviation of the distance can be displayed on the displaying unit **36** (shown in Fig. **4**). If necessary, an adjustment to the first distance **D1** can be based on the displayed difference value so that the operator operates the adjusting unit **312c** to adjust the location of the second body **312b.** By the adjustment, the second body **312b** returns back to its initial location applied in the initial setting operation, with the result that the second distance **D2** is restored to its initial state. After removing the faults or completing the adjustment, the operator can operate the base **31** again to continue the thread-rolling operation.

According to the above operations, the distance-sensing assembly **34** uses the signal transmission to sense changes in the first distance **D1** between the second body **312b** and the first body **312a,** thereby attaining a non-contact detecting and measuring effect. The second distance **D2** of the working passage **333** can be quickly adjusted according to the changes in the first distance **D1** for correction, thereby increasing the quality of forming threads on screw blanks **B** and the thread-forming efficiency and also increasing the number of non-defective screw products. In other words, the yield rate of the thread-rolling operation is efficiently increased.

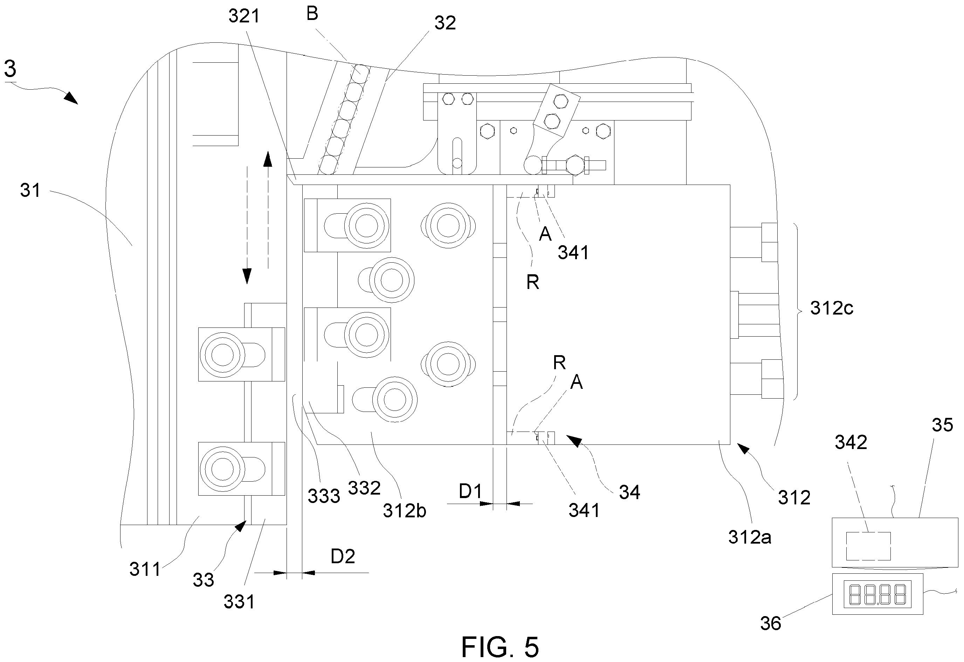

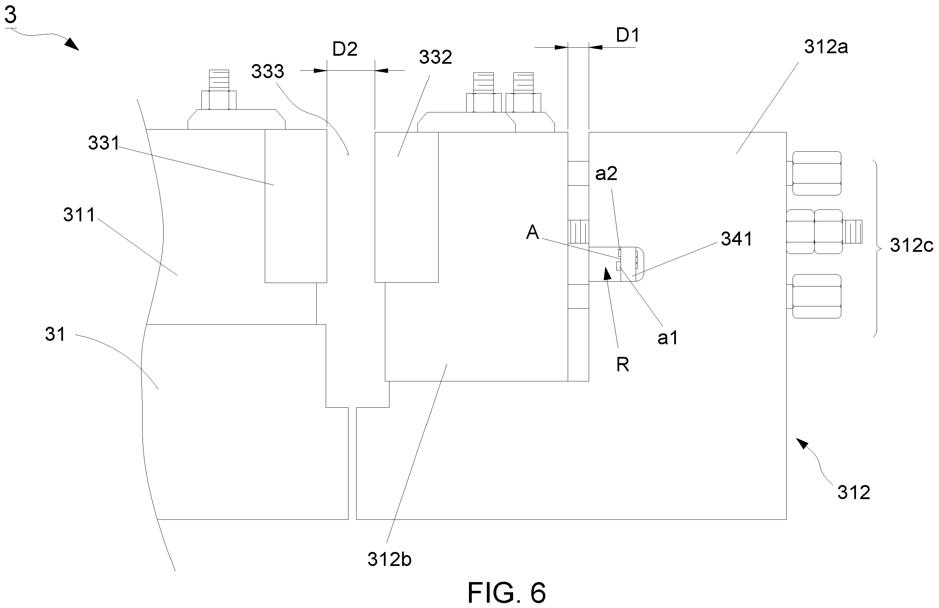

Referring to Fig. **5** and Fig. **6****,** a second preferred embodiment of this invention includes a base **31,** a feeding unit **32,** a thread-forming assembly **33,** and a distance-sensing assembly **34.** The second preferred embodiment is characterized in that the distance-sensing assembly **34** includes a plurality of sensing units **341** respectively disposed on the first body **312a.** Herein, the term "a plurality of" means two or more than two sensing units **341.** For example, two sensing units **341** are shown in this preferred embodiment, wherein each sensing unit **341** is located on each side of the first body **312a.** Furthermore, the first body **312a** includes a plurality of recesses **R** formed thereon. Each sensing unit **341** is disposed in each corresponding recess **R** and connected to the processing module **342.** Preferably, each recess **R** is opposite the second body **312b.** In other words, the recess **R** faces the second body **312b.** Accordingly, in a thread-rolling operation, the processing module **342** compares each numeral data transmitted by each sensing unit **341** with the stored reference value respectively and makes a determination. Alternatively, the processing module **342** conducts a cross comparison between the numeral data of one sensing unit **341** and the numeral data of the other sensing unit **341,** compares the result of the cross comparison with the reference value, and thence makes a determination. The mode of comparison can be adjusted according to needs. Further actions associated with the determination result of the second preferred embodiment are the same as those of the first preferred embodiment.

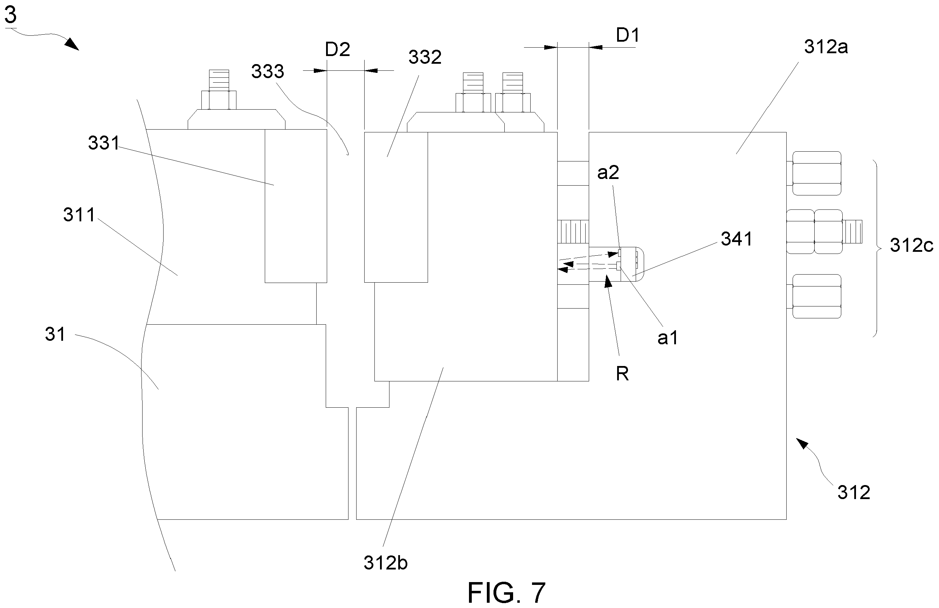

Referring to Fig. **5** and Fig. **7****,** it is allowed to emit signals from the sensing units **341** to the second body **312b** and then reflect the emitted signals back to the recesses **R.** The use of more than sensing unit **341** can increase the sensitivity and precision of the sensing operation, which is highly beneficial to the detection and measurement of variations in the first distance **D1** in a non-contact manner. The numeral data related to the variations can be processed by the processing module **342** so that the working passage **333** can be immediately and properly adjusted or revised when an improper variation or variations occur. Accordingly, the second distance **D2** of the passage **333** can maintain its initial state to increase the yield rate of the production.

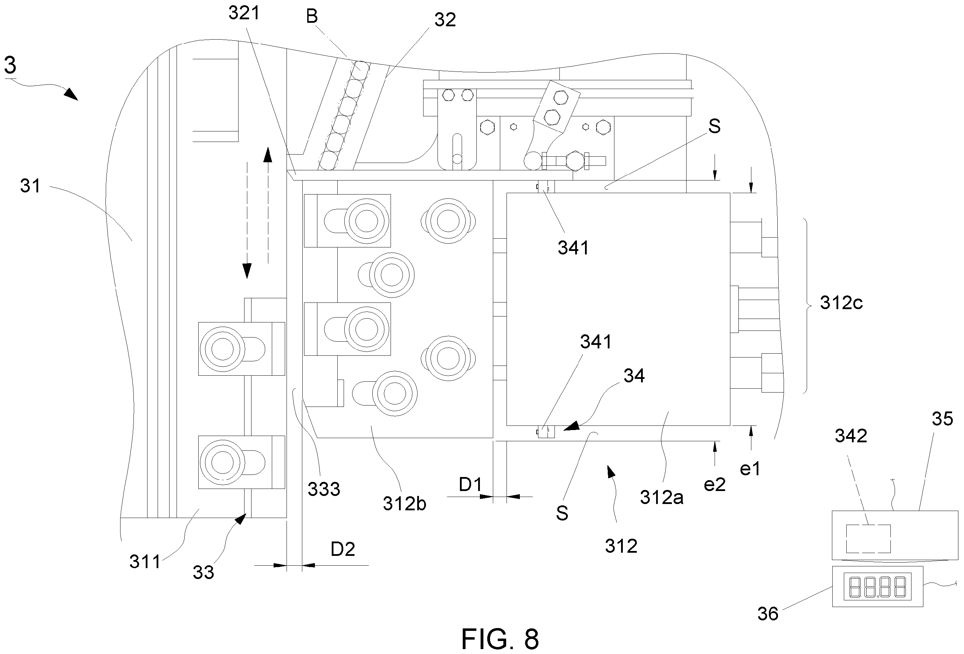

Referring to Fig. **8****,** a third preferred embodiment of this invention includes the same elements disclosed in the second preferred embodiment. The third preferred embodiment is characterized in that a space **S** is formed when a width **e1** of the first body **312a** is lower than a width **e2** of the second body **312b,** and the sensing units **341** are respectively disposed in the space **S.** For example, each sensing unit **341** is disposed on one side surface of the first body **312a** and faces toward the second body **312b.** Accordingly, a non-contact sensing mode conducted by more than one sensing unit **341** still increases the sensitivity and precision of the sensing operation during the thread-rolling operation. The immediate transmission of the numeral data also facilitates the correction and adjustment of the second distance **D2** when abnormalities occur, thereby allowing the working passage **333** to maintain its initial state and increasing the yield rate of the thread-rolling operation.

To sum up, this invention takes advantages of the distance-sensing assembly disposed on the fixed portion of the thread-rolling apparatus to sense the first distance between the first body and the second body of the fixed portion in a non-contact manner while forming threads on screw blanks. Numeral data corresponding to each sensed distance can be compared and analyzed, thereby determining whether the second distance of the working passage is abnormal. The second distance can be properly adjusted according to the change in the first distance to ensure that the working passage maintains its initial condition. Thus, the quality and the yield rate of the thread-rolling operation can be efficiently increased.

While the embodiments are shown and described above, it is understood that further variations and modifications may be made without departing from the scope of this invention.

## Claims

1. A thread-rolling apparatus (3) with distance-sensing operation comprising a base (31), a feeding unit (32) disposed on said base (31), and a thread-forming assembly (33) disposed on said base (31) and located downstream of said feeding unit (32), wherein said base (31) includes a movable portion (311) and a fixed portion (312) disposed beside said movable portion (311), said fixed portion (312) including a first body (312a), a second body (312b) disposed between said first body (312a) and said movable portion (311), and an adjusting unit (312c) configured to adjust a first distance (D1) between said second body (312b) and said first body (312a), said thread-forming assembly (33) including a first die (331) disposed on said movable portion (311) and a second die (332) disposed on said second body (312b), a working passage (333) being formed between said first die (331) and said second die (332), a second distance (D2) being defined by a width of said working passage (333) and related to said first distance (D1) ;
**characterized in that** a distance-sensing assembly (34) is disposed on said fixed portion (312), said distance-sensing assembly (34) including at least one sensing unit (341) disposed on said first body (312a) and a processing module (342) connected to said sensing unit (341) and having a reference value stored therein, said distance-sensing assembly (34) being configured to emit signals to said second body (312b) with said sensing unit (341), said emitted signals returning back from said second body (312b) after said signals reach said second body (312b), said returned signals being received by said sensing unit (341) and transformed into numeral data, said numeral data being transmitted to said processing module (342) for comparison and analysis whereby said sensing unit (341) is adapted to sense variations in said first distance (D1) in a non-contact manner during a process of forming threads on screw blanks (B), thereby determining checking whether said second distance (D2) is proper.

2. The apparatus (3) according to claim 1, wherein said sensing unit (341) includes an emitter (a1) and a receiver (a2), said emitter (a1) being adapted to emit said signals to said second body (312b), said emitted signals returning back from said second body (312b) and being received by said receiver (a2) and transformed into said numeral data.

3. The apparatus (3) according to claim 1 or 2, wherein said distance-sensing assembly (34) includes a plurality of sensing units (341) respectively disposed on said first body (312a).

4. The apparatus (3) according to claim 3, wherein said first body (312a) includes a plurality of recesses (R) opposite said second body (312b), each of said sensing units (341) being disposed in each of said recesses (R).

5. The apparatus (3) according to claim 3, wherein a space (S) is formed when a width (e1) of said first body (312a) is lower than a width (e2) of said second body (312b), said sensing units (341) being disposed in said space (S).

6. The apparatus (3) according to any one of claims 1 to 5, further comprising a displaying unit (36) connected to said distance-sensing assembly (34).

7. The apparatus (3) according to any one of claims 1 to 6, wherein said signals emitted by said sensing unit (341) are light signals.

8. The apparatus (3) according to any one of claims 1 to 6, wherein said signals emitted by said sensing unit (341) are wave signals.
